# EUROPÄISCHE PATENTSCHRIFT

(11) **EP 3 891 564 B1**
(45) Veröffentlichungstag und Bekanntmachung des Hinweises auf die Patenterteilung: **29.01.2025**
(21) Anmeldenummer: 19812820.9
(22) Anmeldetag: 05.12.2019
(51) Int. Cl.: G05B 19/042, G05B 19/418

(54) **INTEGRATION MEHRERER ANLAGENMODULE MIT JEWEILS WENIGSTENS EINER PROZESSTECHNISCHEN EINHEIT ZU EINER MODULAR AUFGEBAUTEN GESAMTANLAGE**
INTEGRATION OF A PLURALITY OF INSTALLATION MODULES EACH HAVING AT LEAST ONE PROCESS-TECHNICAL UNIT TO FORM A MODULARLY CONSTRUCTED OVERALL INSTALLATION
INTÉGRATION DE PLUSIEURS MODULES D'INSTALLATION COMPRENANT CHACUN AU MOINS UNE UNITÉ TECHNIQUE DE PROCESSUS POUR FORMER UNE INSTALLATION GLOBALE DE CONSTRUCTION MODULAIRE

(30) Priorität: 06.12.2018 BE 201805858
(43) Veröffentlichungstag der Anmeldung: 13.10.2021
(73) Patentinhaber: Phoenix Contact GmbH & Co. KG, 32825 Blomberg (DE)
(72) Erfinder: JESCHIN, Jörg, 37574 Einbeck (DE); VOTHKNECHT, Claus, 33189 Schlangen (DE)
(74) Vertreter: Blumbach · Zinngrebe Patentanwälte PartG mbB
(86) Internationale Anmeldenummer: PCT/EP2019/083779
(87) Internationale Veröffentlichungsnummer: WO 2020/115186

(56) Entgegenhaltungen:
- EP-A1- 3 246 773
- WO-A1-2017/129606
- DE-A1- 102014 222 508
- DE-A1- 102016 201 075

## Beschreibung

Die Erfindung betrifft ein System und ein Verfahren zur Integration mehrerer Anlagenmodule mit jeweils wenigstens einer prozesstechnischen Einheit zu einer modular aufgebauten Gesamtanlage.

Bekanntermaßen wird heute der überwiegende Anteil von Prozessanlagen von einem zentralen Leitrechner mit der zentralen Leittechnik (ZLT) eines digitalen Steuerungssystems ("DCS"-digital control system) gesteuert. Dieser Leitrechner ist per Feldbussystem oder direkt per Kabel (typ. 4-20mA) mit allen Sensoren der Anlage verbunden. Alle relevanten Steuerungsvorgänge werden zentral von diesem Rechner übernommen. In den letzten Jahren hat sich jedoch auch ein Bedarf hin zu neuen Produkten in immer geringeren Losgrößen entwickelt. Da eine Produktion, welche auf einem zentralen Steuerungskonzept basiert, in der Regel allerdings nur langsam an sich ändernde Produkte und Produktionsbedingungen bzw. damit verbundenen Prozessbedingungen anzupassen ist, hat sich eine Technologie entwickelt, welche hier bessere Ergebnisse, und also insbesondere kürzere Engineeringzeiten und flexiblere Produktionsbedingungen, liefert. Diese Technologie ist unter dem Stichwort MTP (Modul Type Package) bekannt und betrifft die Entwicklung von immer wieder neu zusammenstellbaren Prozesseinheiten (Modulen), insbesondere auch von chemischen Einheiten, MTP (Modul Type Package) definiert und beschreibt hierzu die Schnittstellen und Funktionen der Automatisierungstechnik von solchen Modulen, so dass letztlich die Integration derartiger Module in eine übergeordnete Prozessführungsebene ermöglicht wird. Hierbei besteht das Konzept in grundsätzlich autarken Produktions- bzw. Prozessmodulen, welche jeweils durch eine Kleinsteuerung automatisiert werden. Beschrieben sind solche Module z.B. in der DE 10 2016 201 075 A1.

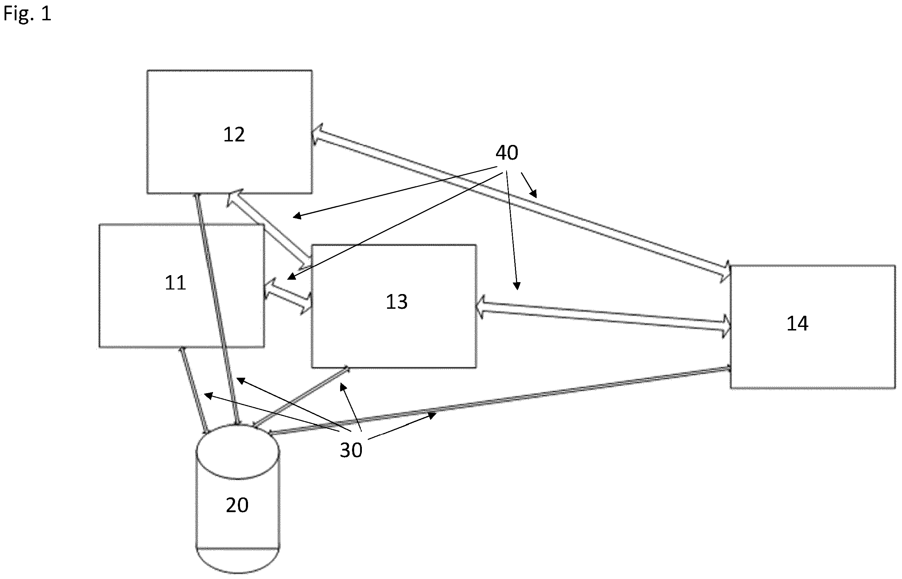

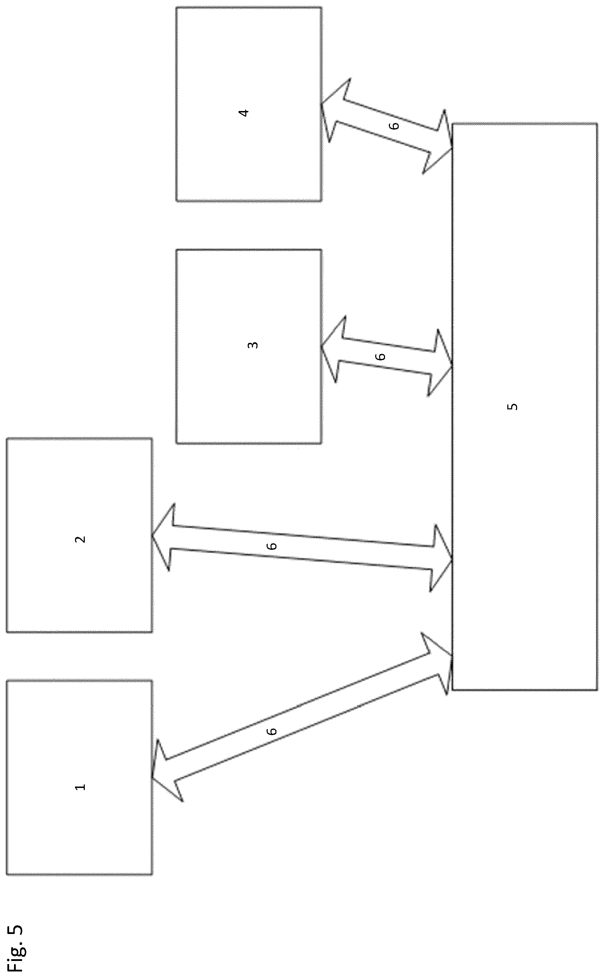

Zur Integration derartiger Module in die Prozessführungsebene können diese dann z.B. mit Hilfe eines MTP-Software-Containers einfach und schnell an ein zentrales Steuerungssystem angebunden werden, wie z.B. bei Fig. 1 dargestellt., welches zu einem deutlich schnelleren und effizienteren Engineering führt, als es in der Vergangenheit möglich war. Hierzu stellt jedes Modul, bei Fig. 1 mit den Bezugszeichen 1 bis 4 belegt, eine standardisierte Service-Beschreibung, sowie eine Objektliste zur Verfügung. Beides wird in einer sogenannten Austausch- oder Beschreibungsdatei beschrieben, in der Regel in einem Standardformat AML (Automation Markup Language), welches ein neutrales, XML-basiertes Datenformat für die Speicherung und zum Austausch von Anlagenplanungsdaten ist und als offener Standard zur Verfügung steht, und sorgt so für eine reibungslose Anbindung der Module an das zentrale Steuerungssystem. In dieser, im Rahmen von MTP eingesetzten Datei sind somit alle für die Einbindung von Daten in die Prozessführungsebene erforderlichen notwendigen Informationen zusammengefasst. Die Module verfügen über eine, in der Regel als speicherprogrammierbare Steuerung ausgebildete Steuerungstechnik, die das Modul und insbesondere die darin enthaltene Hardware zur Durchführung einer Funktion eines technischen Prozesses ansteuert und ferner mit dem jeweiligen Leitsystem, bei Figur 5 mit dem Bezugszeichen 5 belegt, kommuniziert, wobei für die Kommunikation 6 bzw. den Datenaustausch zwischen den Modulen 1 bis 4 und der zentralen Leit- bzw. Steuereinheit 5 in der Regel OPC UA zum Einsatz kommt. OPC UA ("Open Platform Communications Unified Architecture") beschreibt hierbei bekanntermaßen eine Sammlung von Spezifikationen für die Kommunikation im Umfeld der Industrieautomation und der M2M-Kommunikation, die sowohl den Transport von Daten als auch Schnittstellen, Sicherheitsmechanismen und den semantischen Aufbau von Daten, wie z.B. Messwerte, Sensordaten, Regelgrößen oder Steueranweisungen, betreffen.

Die zentrale Leit- bzw. Steuereinheit orchestriert die autarken Module und sorgt so dafür, dass das jeweilige Produkt in der gewünschten Qualität produziert werden kann, wobei neben der Kommunikation, d.h. während des Prozesses die Online-Kommunikation, auch die Konfiguration der gesamten Anlage und also der einzelnen Module immer über die zentrale Leit- bzw. Steuereinheit (ZLT / DCS) gesteuert wird. Es gibt aber auf dem Markt die Notwendigkeit, dass die autarken Einheiten untereinander kommunizieren. Hierfür bedarf es einer dezentralen Verknüpfung autarker Module. Dabei gilt es sowohl die Verknüpfung während der Engineeringphase, insbesondere der Prozessführungsebene (PFE), als auch den Online-Datenaustausch während der Produktion zu berücksichtigen.

Die DE 10 2016 201 075 A1 schlägt demgegenüber ein System zur Durchführung eines Prozesses mittels einer technischen Anlage vor, bei welchem eine Mehrzahl solcher autarken Module vorgesehen ist sowie ein Anfragermodul und ein Netzwerk, welches die autarken Module und das Anfragermodul miteinander verbindet, wobei das Anfragermodul einen Dienst für ein Endprodukt über das Netzwerk bei den Modulen anfragen kann. Das Anfragermodul kann über das Netzwerk mit den autarken Modulen kommunizieren und eine Anfrage nach einem Endprodukt an diese richten. Wird diese Anfrage von einem autarken Modul, das das Endprodukt als Ausgangsprodukt bereitstellt, gehört, fragt dieses autarke Modul dann seinerseits die anderen autarken Module an, um ihm seine benötigten Eingangsprodukte in der gewünschten Menge, zur gewünschten Zeit und im gewünschten Zustand bereitzustellen. Melden sich daraufhin entsprechende autarke Module, fragen diese wiederum nach deren benötigten Eingangsprodukten bei anderen autarken Modulen an. So baut sich nach und nach ein technischer Prozess auf, der mit den entsprechenden autarken Modulen zum vom Anfragermodul angefragten Endprodukt führt, wobei Ausgangspunkt eines solchen Prozesses in der Regel ein autarkes Modul ist, das ein Eingangsprodukt eines anderen autarken Moduls speichert und diesem bereitstellt.

Eine Voraussetzung bei diesem Ansatz ist jedoch, dass für eine solche Verschaltung der Module und der dementsprechenden Aneinander-Kopplung der jeweiligen Dienste, nachfolgend auch als Services bezeichnet, jedes der autarken Module immer über eine an sich vollständig abgeschlossene Funktion verfügen muss.

Dieses stellt sich in der Realität jedoch leider häufig anders dar.

Die WO 2017/129606 A1 offenbart ein Modul für eine technische Anlage aufweisend eine technische Hardware zur Durchführung eines technischen Teilprozesses, eine Steuerung zur lokalen Steuerung der technischen Hardware und eine Außenschnittstelle der Steuerung, sowie ein Verfahren zur Steuerung einer technischen Anlage. Die Steuerung ist eingerichtet, die technische Hardware autark zu steuern. Die Außenschnittstelle umfasst einen OPC-UA Server, der eine fest vorgegebene Informationsstruktur mit statischen Informationen und dynamischen Informationen aufweist. Die statischen Informationen beschreiben die technische Hardware und die Steuerung. Die Steuerung schreibt die dynamischen Informationen als Echtzeit-Werte der technischen Hardware in die Informationsstruktur.

Die DE 10 2014 222508 A1 betrifft ein Modul für eine prozesstechnische Anlage aufweisend eine prozesstechnische Hardware zur Durchführung eines prozesstechnischen Teilprozesses, eine Steuerung zur lokalen Steuerung der prozesstechnischen Hardware und eine Außenschnittstelle 22 der Steuerung, sowie ferner ein Verfahren zur Steuerung einer prozesstechnischen Anlage, die aus mehreren Modulen aufgebaut ist. Die Steuerung ist eingerichtet, die prozesstechnische Hardware autark zu steuern und in eine Anzahl bestimmter definierter Zustände zu bringen. Die Außenschnittstelle kann eine Anzahl von definierten Befehlen empfangen, die den bestimmten definierten Zuständen der prozesstechnischen Hardware entsprechen.

Die EP 3 246 773 A1 offenbart ein Verfahren zum Engineering einer verfahrens- oder prozesstechnischen Anlage mit zumindest einem Funktionsmodul, ferner ein entsprechendes Funktionsmodul sowie eine speicherprogrammierbare Steuerung für ein derartiges Funktionsmodul. Das Funktionsmodul weist eine speicherprogrammierbare Steuerung und ein mittels dieser steuer- und/oder regelbares verfahrens- oder prozesstechnisches Modul zur Verwendung als Teil der Anlage auf. In die speicherprogrammierbare Steuerung ist ein durch Parameter konfigurierbares Anwenderprogramm geladen. Beim Engineering der Anlage werden Informationen zur Funktionsmodulintegration in einer Datei bereitgestellt, die Parameter zur anwendungsspezifischen Konfiguration des Funktionsmoduls mittels eines Anlagen-Engineering-Werkzeugs festgelegt und über eine Schnittstelle, die in einer formalen Beschreibungssprache spezifiziert ist, zur Konfiguration des Anwenderprogramms in einem Speicherbereich der Steuerung abgespeichert. Dazu wird kein Engineering-Werkzeug mehr benötigt, welches spezifisch für die in den Funktionsmodulen jeweils verwendeten speicherprogrammierbaren Steuerungen ist.

Die Lösung nach der Erfindung zeichnet sich durch Verfahren sowie ein System zur Integration mehrerer Anlagenmodule mit jeweils wenigstens einer prozesstechnischen Einheit zu einer modular aufgebauten Gesamtanlage nach Anspruch 1 bzw. nach Anspruch 7 aus.

Die Erfindung sieht folglich ein Verfahren zur Integration mehrerer Anlagenmodule mit jeweils wenigstens einer prozesstechnischen Einheit, welche neben einer Hardware zur Durchführung einer Funktion eines technischen Prozesses auch eine Steuerungstechnik zur Steuerung der Hardware beherbergt, zu einer modular aufgebauten Gesamtanlage, vor, bei welchem die Anlagenmodule räumlich angeordnet und gemäß einer Beschreibung der Gesamtanlage miteinander mechanisch und elektrisch verbunden werden, derart, dass zwischen den Anlagenmodulen zumindest eine datentechnische Kopplung über ein oder mehrere Kommunikationsprotokolle aufgebaut wird. Es wird eine Konfiguration der Gesamtanlage zusammengestellt und auf einer datentechnisch mit den Anlagenmodulen gekoppelten zentralen Server-Einheit gespeichert und jedem Anlagenmodul wird zumindest ein Zugriffspfad zur gespeicherten Konfiguration zugewiesen. Anschließend werden die Anlagenmodule gestartet, und jedes Anlagenmodul baut anschließend eine Verbindung zur der gespeicherten Konfiguration über den Zugriffspfad auf, liest jeweils für das auslesende Anlagenmodul über den Zugriffspfad bestimmte Konfigurationsdaten aus und baut entsprechend der ausgelesenen Konfigurationsdaten die notwendigen Kommunikationsverbindungen zu wenigstens einem weiteren Anlagenmodul auf, wobei sowohl Verknüpfungen zwischen einzelnen Datenobjekten aufgebaut werden als auch Service Schnittstellen aufgerufen werden und die Anlagenmodule daraufhin ihre jeweilige Funktion nach außen über Datenpunkte und Services zur Verfügung stellen.

Die Erfindung schlägt hierzu auch ein entsprechendes System nach Anspruch 7 vor.

Ein wesentlicher Vorteil gegenüber dem Stand der Technik ist folglich darin zu sehen, dass die Lösung nach der Erfindung auf ein zentrales DCS System verzichtet und die Aufgaben des DCS stattdessen dezentralisiert und auf die prozesstechnischen Anlagenmodule verteilt sind. Insbesondere werden hierbei auch die Datenpunkte der einzelnen Anlagenmodule mitberücksichtigt, so dass es jedem Anlagenmodul möglich ist auf externe, einem anderen Anlagenmodul originär zuzurechnende Daten und Sensoren / Aktoren über eine OPC UA basierte Kommunikation zuzugreifen.

Weitere Vorteile und Merkmale der Erfindung ergeben sich aus der nachfolgenden, jedoch beispielhaften Beschreibung bevorzugter Ausführungsformen unter Bezugnahme auf die beigefügten Zeichnungen, in denen zeigen:
- Fig. 1: skizzenhaft eine Ansicht von zu einer Gesamtanlage integrierten, insbesondere in der Prozessführungsebene integrierten, autarken Modulen mit Zugriff auf einen zentralen Datenspeicher mit darin gespeicherter Konfiguration der Gesamtanlage gemäß der Erfindung,
- Fig. 2: skizzenhaft eine Ansicht von in der Prozessführungsebene integrierten autarken Module mit untereinander verschalteten Service Schnittstellen gemäß der Erfindung,
- Fig. 3: skizzenhaft eine Ansicht von zu einer Gesamtanlage integrierten, insbesondere in der Prozessführungsebene integrierten, autarken Modulen mit Zugriff auf einen zentralen, jedoch als Teil eines autarken Moduls ausgebildeten Datenspeicher mit darin gespeicherter Konfiguration der Gesamtanlage gemäß der Erfindung,
- Fig. 4: skizzenhaft eine Ansicht von in der Prozessführungsebene integrierten autarken Module mit untereinander verknüpften Datenobjekten gemäß der Erfindung, und
- Fig. 5: skizzenhaft eine Ansicht einer Anbindung autarker Module an ein zentrales Steuerungssystem zur Integration in die Prozessführungsebene nach Stand der Technik.

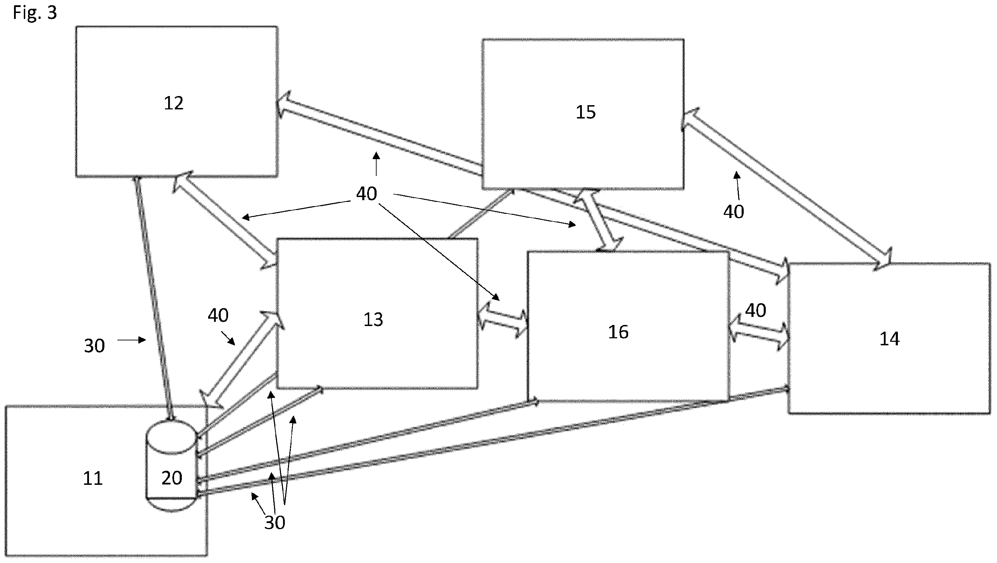

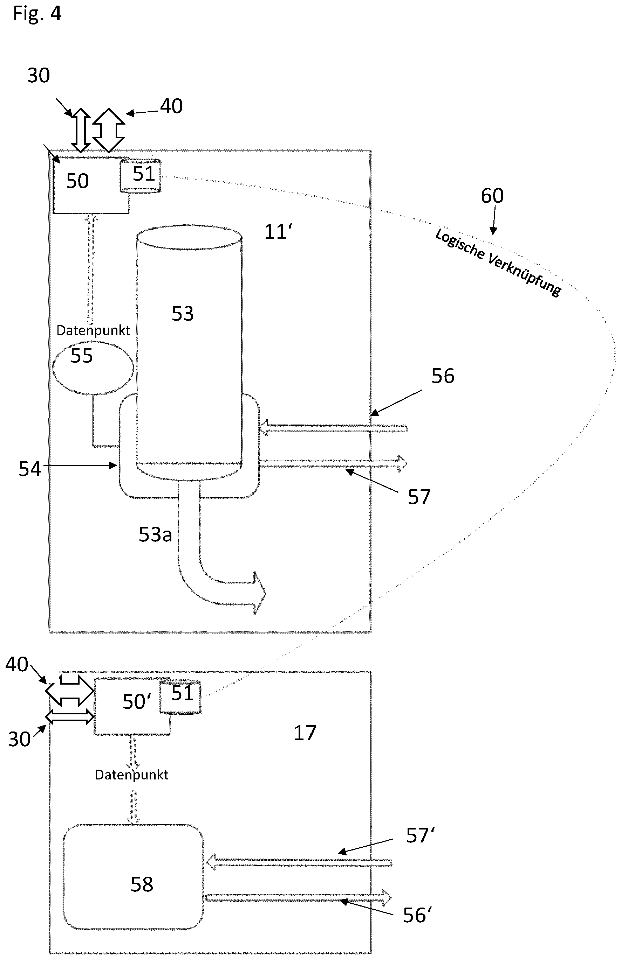

Nachfolgend wird zunächst auf die Figuren 1 und 3 unter weiterer Einbeziehung von Figur 4 Bezug genommen, welche skizzenhaft jeweils eine Ansicht von einer Mehrzahl von alternativ zu einer modular aufgebauten Gesamtanlage integrierten, insbesondere in der Prozessführungsebene integrierten Modulen zeigen. Jedes Modul, nachfolgend und in den Ansprüchen auch als Anlagenmodul bezeichnet, umschließt eine prozesstechnische Einheit, insbesondere eine Einheit aus dem Gebiet der Verfahrenstechnik, wie z.B. eine Mischeinheit mit Zugängen für verschiedene Materialen sowie Ventil und Pumpe für das Abpumpen des prozessierten Materials, eine Reaktoreinheit mit Zu- und Abläufen für ein Kühlmedium eines Kühlkreislaufs oder eine Kältemaschine mit Zu- und Abläufen für das Kühlmedium. Eine solche prozesstechnische Einheit, besitzt gemäß Definition und im Rahmen der Erfindung neben einer Hardware zur Durchführung einer bestimmten Funktion eines technischen Prozesses auch eine Steuerungstechnik, insbesondere eine lokale SPS Steuerungstechnik zur Steuerung der Hardware.

Während bei den Figuren 1 und 3 aus Gründen der Übersichtlichkeit solche Anlagenmodule, mit den Bezugszeichen 11 bis 14 bzw. 11 bis 16 gekennzeichnet, lediglich abstrakt dargestellt sind, sind bei Figur 4 zwei Anlagenmodule 11' und 17 beispielhaft mit einer solchen Hardware und Steuerungstechnik 50 bzw. 50' gezeigt. So ist bei Figur 4 das Anlagenmodul 11' beispielhaft ein Reaktor-Modul und beherbergt als prozesstechnische Einheit einen Reaktor mit entsprechender Hardware, wobei am unteren Ende eines Reaktorbehälters 53 z.B. eine Entnahmemöglichkeit 53a für ein in dem Behälter prozessiertes Materials vorgesehen ist. Beispielsweise kann das Anlagenmodul 11 ` der somit für eine biotechnologische Anwendung vorgesehen sein Der beispielhafte Reaktorbehälter 53 ist ferner mit einem Wärmemantel 54 versehen, an welchem sich eine Temperaturmessstelle 55 zur Aufnahme eines diesbezüglichen Temperatur-Datenpunktes befindet. Ferner besitzt das als Anlagenmodul 11' im dargestellten Beispiel als Steuerungstechnik 50 zweckmäßig eine lokale Steuerung mit Reaktorregelung, welcher auch der an der Temperaturmessstelle aufgenommene Temperatur-Datenpunkt übergeben wird. Wie bei Figur 4 beispielhaft dargestellt, ist die prozesstechnische Einheit des Anlagenmoduls 11' ferner in einen Kühlkreislauf eingebunden, wobei ein Kühlmittelzulauf 56 und ein Kühlmittelablauf 57 skizzenhaft dargestellt sind, mittels welchem Kühlmittel zur Kühlung des Reaktorbehälters diesem zugeführt bzw. aufgewärmtes Kühlmittel wieder vom Reaktorbehälter abgeleitet wird. So kann beispielsweise vorgesehen sein, dass die Steuerungstechnik 50 zur bestimmungsgemäßen Funktionsdurchführung einen bestimmten Temperaturbereich innerhalb vorgegebener Temperaturober- und -untergrenzen einzuhalten hat.

Das weitere bei Figur 4 gezeigte Anlagenmodul 17 ist beispielhaft ein Temperierungs-Modul und beherbergt als prozesstechnische Einheit z.B. eine Kältemaschine 58 mit entsprechender Hardware sowie im dargestellten Beispiel als Steuerungstechnik 50' zweckmäßig eine lokale Steuerung mit Temperaturregelung, welche Stellgrößenparameter umfassende Datenpunkte zur Temperierung der Kältemaschine verarbeitet, insbesondere zur Temperierung und zweckmäßig auch zur Zuführung 56' eines entsprechend temperierten Kühlmittels in einen Kühlkreislauf (Kühlmittelzulauf) und Rückführung 57' von aufgewärmtem Kühlmittel aus dem Kühlkreislauf (Kühlmittelablauf) zurück zur Kältemaschine.

Es sei ferner angenommen, dass die beiden gemäß Figur 4 beispielhaft und gegenüber den Figuren 1 und 3 detaillierter dargestellten Anlagenmodule 11' und 17 an denselben Kühlkreislauf angebunden sind und insofern auch zu einer gemeinsamen, modular aufgebauten Gesamtanlage integriert sind, d.h. gemäß vorliegendem Beispiel mit einem, einen Reaktor umfassenden Anlagenmodul 11' und einem, eine Kältemaschine umfassenden Anlagenmodul 17 zur Kühlung des Reaktors.

Zur Integration der somit wenigstens zwei (vgl. Figur 4), oder auch größeren Mehrzahl (vgl. Figuren 1 und 3) von Anlagenmodulen gemäß Erfindung zu einer modular aufgebauten Gesamtanlage, werden bzw. sind die Anlagenmodule räumlich angeordnet und gemäß Beschreibung der Gesamtanlage mit einander mechanisch und elektrisch verbunden. Zwischen den Anlagenmodulen ist hierdurch ferner zumindest eine datentechnische Kopplung über ein oder mehrere Kommunikationsprotokolle gegeben. Basis für eine solche datentechnische Kopplung kann folglich z.B. auch ein Ethernet-Netzwerk sein, über welches die Anlagenmodule vorzugsweise unter Nutzung von OPC UA miteinander, insbesondere auch zum Aufbau nachfolgend beschriebener Kommunikationsverbindungen 40, kommunizieren können, wozu insbesondere die jeweiligen Steuertechniken der Anlagenmodule mit einem in den Figuren nicht näher dargestellten OPC UA Server eingerichtet sein können.

Ferner ist, wie insbesondere den Figuren 1 und 3 zu entnehmen, eine zentrale, gleichermaßen datentechnisch mit den Anlagenmodulen gekoppelte Server-Einheit 20 vorgesehen, auf welcher eine Konfiguration der Gesamtanlage gespeichert wird bzw. ist. Zur Speicherung der Konfiguration hält die Server-Einheit folglich zweckmäßig einen entsprechend ausgelegten Datenspeicher bereit. Eine solche zentrale Server-Einheit 20, z.B. ein SQL-Server (SQL - Structured Query Language), kann, wie bei Figur 3 zu sehen, Teil einer der Anlagenmodule, d.h. insbesondere der prozesstechnischen Einheiten, selbst sein, oder, wie bei Figur 1 skizziert, eine hoch verfügbare, insbesondere eigenständig ausgebildete Infrastruktur besitzen.

Um auf die Konfiguration und insbesondere auf jeweilige für ein Anlagenmodul bestimmte Konfigurationsdaten zugreifen zu können, wird jedem Anlagenmodul vor Inbetriebnahme zumindest ein Zugriffspfad 30 zur gespeicherten Konfiguration zugewiesen, und zweckmäßig als entsprechende Adresse auf jedem Modul, insbesondere in der jeweiligen Steuerungstechnik eingestellt.

Das Verbindungsmanagement ist ferner zweckmäßig derart eingerichtet, dass die Verbindung immer von der Datensenke ausgeht, d.h., dass immer lesende Zugriffe auf die Konfiguration erfolgen. Damit ist folglich auch eindeutig, welche Verbindung zu welchem Anlagenmodul zugeordnet ist, so dass die für jedes Anlagenmodul bestimmten Konfigurationsdaten über den jeweiligen Zugriffspfad eindeutig bestimmt sind. Ein solches zweckmäßiges Verbindungsmanagement gilt somit nicht nur für den Zugriff auf die Konfiguration sondern insbesondere auch für die nachfolgend beschriebenen, auf den ausgelesenen Konfigurationsdaten entsprechend aufzubauenden Kommunikationsverbindungen 40. Denn durch immer von einer Datensenke ausgehende Verbindungen, d.h. lesende Verbindungszugriffe, auch in Bezug auf die Kommunikationsbeziehungen zwischen den Anlagenmodulen kann sichergestellt werden, dass auch ein einzelnes, autarkes Anlagenmodul bei Verlust einer solchen Datenverbindung in einen sicheren Modus gesteuert werden kann. Werden auch von einer Datenquelle ausgehende Verbindungen, d.h. schreibende Verbindungszugriffe, genutzt, besteht das Risiko, dass ein "beschriebenes" Anlagenmodul bei Datenübertragungsverlusten nicht weiß, was es tun soll und wäre damit im Verständnis der Prozessindustrie unsicher.

Bei Inbetriebnahme der Gesamtanlage und also bei Start bzw. "Hochlaufen" der Anlagenmodule sind diese ferner jeweils eingerichtet, eine Verbindung zu der gespeicherten Konfiguration über den jeweils zugeordneten Zugriffspfad aufzubauen und jeweils für das Anlagenmodul bestimmte Konfigurationsdaten auszulesen. Für einen solchen Verbindungsaubau und das Auslesen stehen bekanntermaßen je nach zugrundeliegendem Protokoll üblicherweise entsprechende Dienste zur Verfügung.

Anschließend baut jedes Anlagenmodul, bzw. dessen jeweilige Steuerungstechnik, die den ausgelesenen Konfigurationsdaten entsprechenden Kommunikationsverbindungen 40 auf und prüft insbesondere, ob die jeweils eigene Betriebsbereitschaft vorliegt, d.h. ob alle Verbindungen aufgebaut sind. Ein jeweiliges, Konfigurationsdaten auslesendes Anlagenmodul baut folglich Kommunikationsverbindungen 40 zu wenigstens einem weiteren Anlagenmodul auf. Ein solcher Aufbau der Verbindungen beinhaltet hierbei sowohl den Aufbau von Verknüpfungen zwischen einzelnen Datenobjekten als auch den Aufruf von Schnittstellen für Services, so dass die Anlagenmodule in Betrieb somit über eine direkte Kommunikation untereinander ihre jeweilige Funktion nach außen über Datenpunkte und Services zur Verfügung stellen können.

Ein solches Datenobjekt repräsentiert bekanntermaßen die IT-Abbildung eines Datenpunktes und beinhaltet den Wert des Datenpunktes angereichert um weitere Informationen wie z.B. physikalische Größe. Zur Darstellung einer Reaktortemperatur von 78°C wird z.B. aus einem Datenpunktwert an der Temperaturmessstelle 55 (Figur 4) z.B. das entsprechende Datenobjekt mit einem Wert "78" und einer physikalischen Größe "°C" zur Darstellung einer Reaktortemperatur von 78°C.

Die prozesstechnische Gesamtanlage wird folglich über eine autarke Orchestrierung dieser Anlagenmodule aufgebaut, wobei auf ein zentrales DCS-System verzichtet werden kann und die Aufgaben des DCS stattdessen dezentral gelöst und auf die prozesstechnischen Anlagenmodule verteilt sind.

Auch für eine solche reibungslose Integration der somit gemäß der Erfindung autarken Anlagenmodule, sind die Anlagenmodule 11 bis 14 (Figur 1), bzw. 11 bis 16 (Figur 3) oder 11`, 17 (Figur 4) zweckmäßig wiederum über eine Beschreibungsdatei hierfür entsprechend beschrieben, welche je nach durchzuführender Funktion insbesondere Informationen über
- Parameter (Konstanten),
- Liste von verbindbaren Datenpunkte mit Datentyp, Zugriffsrechten, etc.,
- Liste der angebotenen Services/Dienstschnittstelle,
- Liste von zu nutzenden Services/ Dienstschnittstelle (Stubs), und/oder
- evtl. weitere Beschreibungen zu Alarmen, etc.
enthält.

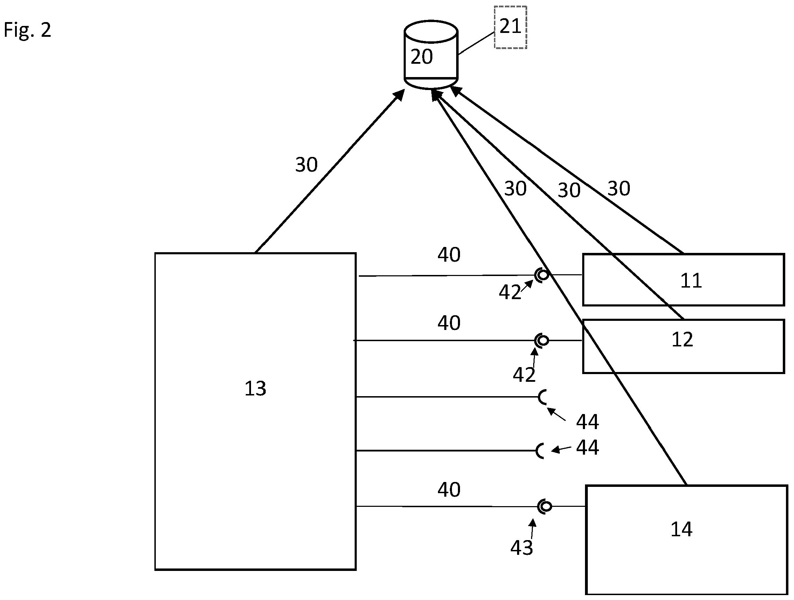

Die dezentral gespeicherte Konfiguration beinhaltet hingegen in zweckmäßiger Ausführung die Verschaltung bzw. Verknüpfung von Datenobjekten zwischen den Anlagenmodulen sowie die Verschaltung von Service Schnittstellen. Zweckmäßig kann hierbei auch jeweils ein Satz von Services zu einer gemeinsamen Dienstschnittstelle für ein Anlagenmodul zusammengefasst sein, welches nachfolgend noch beispielhaft anhand von Figur 2 näher erläutert wird. Jedes Anlagenmodul weiß nach Einlesen der für ihn bestimmten Konfiguration somit z.B. auch, welche Services/Dienstschnittstelle (Stubs) genutzt werden sollen. Diese stellen dann z.B. die Datensenken dar, für die jeweils eine Verbindung zu einem Service eines anderen Moduls aufgebaut wird. Auch kann über die verknüpften Datenobjekte zweckmäßig z.B. von einem ersten der Anlagenmodule auf Daten und/oder Sensoren/Aktoren eines zweiten der Anlagenmodule zugegriffen werden. So ist beispielsweise in Figur 4 durch Aufbau entsprechender Kommunikationsverbindungen 30 zwischen den Anlagenmodulen 11' und 17 eine Verknüpfung 60 zwischen dem in der Steuerungstechnik 50 und der Steuerungstechnik 50' jeweils enthaltenem Datenobjekt 51 derart hergestellt, dass das Anlagenmodul 17 für dessen prozesstechnische Funktion, d.h. gemäß Beispiel nach Figur 4 für die Temperierung, auf Stell- und/oder Messgrößen des Anlagenmoduls 11', d.h. gemäß Beispiel nach Figur 4 insbesondere auf die Reaktortemperatur, zugreift.

Sind in den ausgelesenen Konfigurationsdaten in zweckmäßiger Weiterbildung auch Parameter enthalten, so werden diese als konstante Werte umgesetzt und von einem jeweiligen Anlagenmodul selbsttätig lokal auf die eigenen Datenobjekte kopiert.

Auch kann in einer bevorzugten Weiterbildung eine Ablauflogik Teil der Konfiguration sein. Eine solche Ablauflogik kann folglich beim Auslesen von für ein Anlagenmodul bestimmten Konfigurationsdaten auch mitgeladen und anschließend mittels der Steuerungstechnik des auslesenden und die Ablauflogik ladenden Anlagenmoduls zur Ausführung gebracht werden. Eine solche Ablauflogik kann z.B. ein Stück SPS Code sein. Es könnte sich also z.B. um Logikverknüpfung oder auch Maximalwertbildung für mehrere Temperaturmessstellen handeln. Insgesamt kann folglich die Konfiguration der Gesamtanlage wesentlich flexibler ausgerichtet sein. Alternativ ist in der Steuerungstechnik eines jeweiligen Anlagenmoduls die notwendige Steuerungslogik für das von diesem Anlagenmodul auszuführende (Teil-) Verfahren bereits vollständig hinterlegt.

Auch können je nach Ausführung ein Betriebsmodus, beispielsweise der eigentliche Prozessstart der Gesamtanlage, oder auch unterschiedliche Betriebsmodi daraufhin z.B. durch einen externen Trigger ausgelöst werden sowie ergänzend oder alternativ durch ausgetauschte Services und/oder Datenobjekte und/oder mit Ein- und/oder Ausgängen zur Erfassung von Datenpunkten gekoppelten Hardware-Schaltern gesteuert werden In der Praxis bedarf es hierbei in der Regel jedoch einer expliziten Aktion und kann z.B. auch unter Nutzung einer Visualisierungsseite auf einer Web-Oberfläche erfolgen.

Über die Zugriffspfade 30 können die Konfigurationsdaten in zweckmäßiger Weise auch während des Betriebs durch die einzelnen Anlagenmodule überwacht werden. Wenn sich Änderungen in den Konfigurationsdaten eines oder auch mehrerer Anlagenmodule einstellen, können diese folglich je nach Ausführung und/oder nach Status des Prozesses sofort oder nach Re-Initialisierung übernommen werden. Im einfachsten Fall kann es sich hier um angepasste Parameter handeln, um den Prozess bzw. das Verfahren zu optimieren. Aber auch Erweiterungen und/oder Veränderungen an der Gesamtanlage sind auf diesem Weg flexibel handhabbar. Die Überwachung der Konfigurationsdaten auf Änderung kann je nach eingesetzter technischer Lösung z.B. durch eine Polling-Verfahren oder auch über ein Event basiertes Protokoll erfolgen.

Ist folglich eine Gesamtanlage zur Durchführung eines bestimmten z.B. gemäß Figur 1 und unter weiterer Einbeziehung von Figur 2 aus vier solchen erfindungsgemäß autarken Anlagenmodulen 11, 12, 13, und 14 aufgebaut, können beispielsweise Anlagenmodule 11 und 12 Vorlagen- bzw. Zuführmodule sein. Ferner ist das Anlagenmodul 13 beispielsweise ein Reaktormodul und das Anlagenmodul 14 beispielsweise ein Speichertankmodul. Von den Anlagenmodule 11 und 12 werden somit z.B. Stoffe in das Reaktormodul gefördert und nach der Reaktion der produzierte Stoff zu dem Speichertankmodul weitertransportiert. Von dort kann das fertige Gesamtprodukt dann z.B. später entnommen werden.

Wie zuvor beschrieben, werden die hierfür notwendigen Services und Kommunikationsbeziehungen sowie die Verschaltung von Datenobjekten ohne zentrale Steuerung konfiguriert und auf dem zentralem Datenspeicher-Server 20 abgelegt. Jedem Anlagenmodul wird ein Zugriffspfad 30 zu dem Ort der Konfigurationsdaten zugewiesen und die Anlagenmodule sind somit nach entsprechendem Starten in die Lage versetzt, autark die jeweils für sie bestimmten Konfigurationsdaten auszulesen und als Teil der modularen Gesamtproduktion zu dienen (vgl. auch Fig. 2a).

Bei Figur 2 sind diesbezüglich beispielhaft und der Übersichtlichkeit halber die aufgebauten Kommunikationsbeziehungen 40 zwischen den Anlagenmodulen lediglich hinsichtlich der aufgerufen Service Schnittstellen bzw. insbesondere verknüpften Dienstschnittstellen 42, 43 skizziert, für welche bevorzugt jeweils ein Satz von Service Schnittstellen zusammengefasst ist.

Beispielsweise sind zu den gemeinsamen Dienstschnittschnellen 42, welche gemäß Ausführungsbeispiel jeweils das Zusammenwirken zwischen Reaktormodul und den Zuführmodulen betrifft, die Services einer Initialisierung, einer Vorabreinigung und einer anschließenden Stoffzufuhr zusammengefasst.

Die Konfigurationsdaten könnten also z.B. folgende, zu der Dienstschnittstelle 42 zusammengefasste Servicekonfiguration umfassen:

```
 interface IFeed
 {
 void Initialization(...);
 void Cleaning(...);
 void PumpMaterial(...);
 }
```

Selbstverständlich können auch andere und/oder weitere Service umfasst sein. Hierbei kann z.B. auch mittdefiniert sein, dass mit der Stoffzufuhr erst nach einem vorbestimmten Zeitablauf im Anschluss an die Vorabreinigung gestartet werden soll.

Ferner betrifft die gemeinsame Dienstschnittschnelle 43 z.B. das Zusammenwirken zwischen Reaktormodul und Speichertankmodul. Hierfür zusammengefasste Services können z.B. wiederum das grundsätzliche Initialisieren betreffen sowie einen Ventilcheck und das anschließende Inertisieren des Speichertanks.

Die Konfigurationsdaten könnten also z.B. folgende, zu der Dienstschnittstell 43 zusammengefasste Servicekonfiguration umfassen:

```
 interface IStorage
 {
 void Initialization(...);
 void CheckValveStatus(...);
 void Inerting(...);
 }
```

Auch bezüglich der Dienstschnittstelle 43 können grundsätzlich andere und/oder weitere Service zusammengefasst sein.

Wie bei Figur 2 sehen, sind zwei weitere Dienstschnittschnellen 44 des Anlagenmoduls 13 nicht verknüpft. Es sei beispielhaft angenommen, dass das als Reaktormodul ausgebildete Anlagenmodul 13 bis zu vier Zuführmodule unterstützt, Im Beispiel gemäß Figur 2 sind zunächst nur 2 Zuführmodule in der Gesamtanlageanlage verwendet. Sofern ein bis zwei weitere Zuführmodule ergänzt würden, könnte also die in den Konfigurationsdaten zu einer jeweiligen Dienstschnittstelle 44 zusammengefasste Servicekonfiguration im Wesentlichen der der Dienstschnittstelle 42 entsprechen. Eine in der auf dem zentralen Datenspeicher-Server 20 gespeicherten Konfiguration enthaltene Verschaltungstabelle 21 von Datenobjekten könnte im Beispiel gemäß der Figur 2 dabei wie folgt aussehen:
*Reactor.FeedA* = *Feed1.Feed*
*Reacfor. FeedB = Feed2. Feed*
*Reactor.FeedC* = *NULL*
*Reactor.FeedD* = *NULL*
*Reactor. StorageX* = *Storage1. Storage;*
*wobei mit Reactor.FeedA ein Datenobjekt des Anlagenmoduls 13 identifiziert ist, das mit einem Datenobjekt des Anlagenmoduls 11, identifiziert mit "Feed1.Feed", zu verknüpfen ist; mit Reactor.FeedB ein Datenobjekt des Anlagenmoduls 13 identifiziert ist, das mit einem Datenobjekt des Anlagenmoduls 12, identifiziert mit "Feed2.Feed", zu verknüpfen ist; mit Reactor.FeedC und Reactor.FeedD jeweilige Datenobjekte des Anlagenmoduls 13 identifiziert sind, die noch nicht zu verknüpfen sind und daher auf NULL gesetzt sind, und mit Reactor.SforageX ein Datenobjekt des Anlagenmoduls 13 identifiziert ist, das mit einem Datenobjekt des Anlagenmoduls 14, identifiziert mit "Storage1. Storage", zu verknüpfen ist.*

Wie erwähnt, wurde der Übersichtlichkeit halber in Figur 2 auf die aufgebauten Kommunikationsbeziehungen 40 zwischen den Anlagenmodulen betreffend die verknüpften Datenobjekte verzichtet. Der autarke Aufbau erfolgt aber in im Wesentlichen gleicher Weise. Eine solche Verknüpfung von Datenobjekten ist jedoch, wie zuvor bereits erwähnt, im Beispiel nach Figur 4 gezeigt. Wird in der dort skizzierten Gesamtanlage also z.B. für eine Temperaturregelung durch das als Temperierungsmodul ausgebildete Anlagenmodul 17 mindestens eine Messgröße aus dem als Reaktormodul ausgebildeten Anlagenmodul 11' benötigt, so wird diese automatisch als ein Datenobjekt 51 ohne Umwege über eine PFE (Prozessführungsebene, DCS, PLS) über die entsprechende Verknüpfung 60 zur Verfügung gestellt.

Alle Aufrufe der Services und auch der Zugriff auf externe Datenpunkte über die jeweils verknüpften Datenobjekte erfolgt somit direkt zwischen den Anlagenmodulen ohne Umweg über ein zentrales Leitsystem (ZLT / DCS).

Der Start und die Kontrolle der Gesamtanlage gemäß Figur 2 oder auch gemäß Figur 4 kann in diesen Beispielen z.B. über manuelle Schalter am Reaktormodul erfolgen.

Wird basierend auf dem Beispiel nach Figur 2 zu einem späteren Zeitpunkt ein anderes jedoch ähnliches Produkt benötigt, kann die modulare Gesamtproduktionsanlage z.B. um eine weitere Vorlage für ein Additiv, beispielsweise durch Anlagenmodul 15 gemäß Figur 3 und/oder einen Mischer, beispielsweise durch Anlagenmodul 16 gemäß Figur 3 erweitert werden. Auch hier sind wiederum nur die im zentralen Datenspeicher-Server 20 hinterlegten Konfigurationsdaten anzupassen und den hinzugefügten Anlagenmodulen dementsprechende Zugriffspfade 30 zuzuweisen.

Beispielsweise wird bei Erweiterung der Gesamtanlage durch das Anlagenmodul 15 in obiger Verschaltungstabelle "Reactor.FeedC = Feed3.Feed" hinzugefügt.

Wie ferner zuvor bereits erwähnt, kann auch ein Anlagenmodul selbst die Rolle der zentralen Datenspeicherung übernehmen, insbesondere, wenn dieses, insbesondere dessen Steuertechnik, genügend Rechnerleistung und Datenspeicher zur Verfügung stellt. Dies ist beim Stand der heutigen speicherprogrammierbaren Steuerungen (SPS) schon der Fall. Es können also modulare, flexible Prozessanlagen bzw. Anlagenteile ohne zentrale Steuerung aufgebaut werden.

Unter Berücksichtigung vorstehender Beschreibung kann somit zusammenfassend nochmals festgehalten werden, dass eine Gesamtanlage nach der Erfindung ohne zentrale Steuerung sowohl modular aufbaubar ist und betrieben werden kann, wobei auch in der Regel eine höhere Ausfallsicherung durch die Nutzung zumindest teilautarker Prozesse gegeben ist.

Die jeweils beteiligten Anlagenmodule stellen hierbei ihre Schnittstellen anderen Anlagenmodulen zur Verfügung und nutzen auch die Schnittstellen anderer Anlagenmodule, so dass sowohl Serviceverknüpfungen aber auch Datenverknüpfungen möglich sind. Die basierend auf in einer zentral gespeicherten Konfiguration hinterlegten Kommunikationsbeziehungen zwischen den autarken Anlagenmodulen direkt unterhaltenen Kommunikationen umfassen somit Daten sowie Dienste, wie insbesondere Anfragen und/oder Kommandos. Während je nach gewünschter Gesamtanlage die einzelnen, modular integrierbaren Anlagenmodule jeweils eine bestimmte Funktion eines technischen Prozesses in den Gesamtprozess einbringen, können die jeweiligen spezifischen Paramater von außen vorgegeben und im zentralen Server zur Speicherung abgelegt sein, so dass auch Ablaufvarianten eines durchzuführenden Prozesses äußerst flexibel Teil einer solchen zentralen hinterlegten Konfiguration sein können. Auch von einem oder mehreren Anlagenmodulen zu übernehmende Prozesslogik kann hierbei Teil der zentral gespeicherten Konfiguration sein. Änderungen in der Konfiguration, z.B. bei Parameteranpassungen können von den Anlagenmodulen überwacht und je nach spezieller Ausführung entsprechend berücksichtigt werden. So kann z.B. ein hiervon betroffener Teilprozess gestoppt werden, zusätzliche Anlagenmodule mechanisch und elektrisch mit eingebunden werden und in einen geänderten Prozess entsprechend der in der Konfiguration vorgenommenen Änderungen nach Wiederanlauf und automatischer Übernahme der Änderungen neu integriert werden.

## Patentansprüche

1. Verfahren zur Integration mehrerer Anlagenmodule (11, 11', 12, 13, 14, 15, 16, 17) mit jeweils wenigstens einer prozesstechnischen Einheit, welche neben einer Hardware zur Durchführung einer Funktion eines technischen Prozesses auch eine Steuerungstechnik (50, 50') zur Steuerung der Hardware beherbergt, zu einer modular aufgebauten Gesamtanlage, wobei die Anlagenmodule (11, 11', 12, 13, 14, 15, 16, 17) räumlich angeordnet und gemäß einer Beschreibung der Gesamtanlage miteinander mechanisch und elektrisch verbunden werden, derart, dass zwischen den Anlagenmodulen (11, 11',12, 13, 14, 15, 16, 17) zumindest eine datentechnische Kopplung über ein oder mehrere Kommunikationsprotokolle aufgebaut wird, und wobei eine Konfiguration der Gesamtanlage zusammengestellt und auf einer datentechnisch mit den Anlagenmodulen (11, 11', 12, 13, 14, 15, 16, 17) gekoppelten zentralen Server-Einheit (20) gespeichert wird, jedem Anlagenmodul (11, 11', 12, 13, 14, 15, 16, 17) zumindest ein Zugriffspfad (30) zur gespeicherten Konfiguration zugewiesen wird, und die Anlagenmodule (11, 11', 12, 13, 14, 15, 16, 17) gestartet werden,
ferner nach dem Start der Anlagenmodule (11, 11', 12, 13, 14, 15, 16, 17) von jedem Anlagenmodul (11, 11', 12, 13, 14, 15, 16, 17) die Schritte durchgeführt werden:
Aufbauen einer Verbindung zur der gespeicherten Konfiguration über den Zugriffspfad (30),
Auslesen von jeweils für das auslesende Anlagenmodul (11, 11', 12, 13, 14, 15, 16, 17) über den Zugriffspfad (30) bestimmte Konfigurationsdaten,
Aufbauen von entsprechend der ausgelesenen Konfigurationsdaten notwendigen Kommunikationsverbindungen (40) zu wenigstens einem weiteren Anlagenmodul (11, 11', 12, 13, 14, 15, 16, 17), wobei sowohl Verknüpfungen (60) zwischen einzelnen Datenobjekten (51) aufgebaut werden als auch Service Schnittstellen aufgerufen werden und die Anlagenmodule (11, 11', 12, 13, 14, 15, 16,17) ihre jeweilige Funktion nach außen über Datenpunkte und Services zur Verfügung stellen.

2. Verfahren nach Anspruch 1,
wobei über die verknüpften Datenobjekte (51) von einem ersten der Anlagenmodule (11, 11', 12, 13, 14, 15, 16, 17) auf Daten und/oder Sensoren/Aktoren eines zweiten der Anlagenmodule (11, 11', 12, 13, 14, 15, 16, 17) zugegriffen wird.

3. Verfahren nach Anspruch 1 oder 2,
wobei in den ausgelesenen Konfigurationsdaten enthaltene Parameter als konstante Werte umgesetzt und von jedem Anlagenmodul (11, 11', 12, 13, 14, 15, 16, 17) selbsttätig lokal auf die eigenen Datenobjekte (51) kopiert werden.

4. Verfahren nach einem der Ansprüche 1 bis 3,
wobei beim Auslesen von jeweiligen Konfigurationsdaten auch Ablauflogik geladen und anschließend mittels der Steuerungstechnik (50, 50') des auslesenden und die Ablauflogik ladenden Anlagenmoduls (11, 11', 12, 13, 14, 15, 16, 17) zur Ausführung gebracht wird.

5. Verfahren nach einem der Ansprüche 1 bis 4,
wobei wenigstens ein Betriebsmodus der Gesamtanlage über Kommunikationsverbindungen (40) ausgetauschte Services und/oder Datenobjekte (51) und/oder mit Ein- und/oder Ausgängen zur Erfassung von Datenpunkten gekoppelten Hardware-Schaltern gesteuert wird.

6. Verfahren nach einem der Ansprüche 1 bis 5,
wobei die in der Konfiguration enthaltenen Konfigurationsdaten während des Betriebs der Gesamtanlage von den Anlagenmodulen (11, 11', 12, 13, 14, 15, 16, 17) überwacht werden und bei Einstellung von Änderungen in der Konfiguration sofort oder nach Re-Initialisierung von wenigstens einem der mehreren Anlagenmodulen (11, 11', 12, 13, 14, 15, 16, 17) übernommen werden, wobei zur Überwachung der Konfigurationsdaten ein Polling-Verfahren oder ein Event basiertes Protokoll eingesetzt wird.

7. System zur Integration mehrerer Anlagenmodule (11, 11', 12, 13, 14, 15, 16, 17) mit jeweils wenigstens einer prozesstechnischen Einheit, welche neben einer Hardware zur Durchführung einer Funktion eines technischen Prozesses auch eine Steuerungstechnik (50, 50') zur Steuerung der Hardware beherbergt, zu einer modular aufgebauten Gesamtanlage,
wobei die Anlagenmodule (11, 11', 12, 13, 14, 15, 16, 17) räumlich angeordnet und gemäß einer Beschreibung der Gesamtanlage mit einander mechanisch und elektrisch verbunden sind, derart, dass zwischen den Anlagenmodulen (11, 11', 12, 13, 14, 15, 16, 17) zumindest eine datentechnische Kopplung über ein oder mehrere Kommunikationsprotokolle gegeben ist, ferner umfassend:
eine zentrale, datentechnisch mit den Anlagenmodulen (11, 11', 12, 13, 14, 15, 16, 17) gekoppelte Server-Einheit (20), auf welcher eine Konfiguration der Gesamtanlage gespeichert ist, wobei jedem Anlagenmodul (11, 11', 12, 13, 14, 15, 16, 17) zumindest ein Zugriffspfad (30) zur gespeicherten Konfiguration bekannt ist, so dass nach Starten der Anlagenmodule (11, 11', 12, 13, 14, 15, 16, 17) diese eingerichtet sind, zum
Aufbauen einer Verbindung zur der gespeicherten Konfiguration über den Zugriffspfad (30),
Auslesen von jeweils für das auslesende Anlagenmodul (11, 11', 12, 13, 14, 15, 16, 17) über den Zugriffspfad (30) bestimmte Konfigurationsdaten,
Aufbauen von entsprechend der ausgelesenen Konfigurationsdaten notwendigen Kommunikationsverbindungen (40) zu wenigstens einem weiteren Anlagenmodul (11,11', 12, 13, 14, 15, 16, 17), welches sowohl den Aufbau von Verknüpfungen (60) zwischen einzelnen Datenobjekten (51) als auch den Aufruf von Service Schnittstellen beinhaltet und wobei die Anlagenmodule (11, 11', 12, 13, 14, 15, 16, 17) anschließend ihre jeweilige Funktion nach außen über Datenpunkte und Services zur Verfügung stellen.

8. System nach Anspruch 7, wobei
die zentrale Server-Einheit (20) Teil eines der Anlagenmodule (11, 11', 12, 13, 14, 15, 16, 17), insbesondere einer der prozesstechnischen Einheiten ist, oder wobei die zentrale Server-Einheit (20) eine zentrale hoch verfügbare Infrastruktur besitzt.

9. System nach Anspruch 7 oder 8, wobei
die Konfiguration die Verschaltung von Datenobjekten (51) zwischen den Anlagenmodulen (11, 11', 12, 13, 14, 15, 16, 17) sowie die Verschaltung von Service Schnittstellen beinhaltet, wobei insbesondere jeweils ein Satz von Service Schnittstellen zu einer gemeinsamen Dienstschnittstelle (42, 43) für ein Anlagenmodul (11,11', 12, 13, 14, 15, 16, 17) zusammengefasst ist und/oder wobei ein Ablauflogik Programm Teil der Konfiguration ist.

10. System nach Anspruch 7, 8 oder 9, wobei
jedes der Anlagenmodule (11, 11', 12, 13, 14, 15, 16, 17) selbst über eine Beschreibungsdatei beschrieben ist, welche insbesondere enthält:
- Parameter,
- Liste von verbindbaren Datenpunkte mit Datentyp, Zugriffsrechten, etc.,
- Liste von angebotenen Services/Interfaces, und/oder
- Liste von genutzten Services/Interfaces (Stubs).

## Claims

1. Method for integrating a plurality of installation modules (11, 11',12, 13, 14, 15, 16, 17) each having at least one process-technical unit, which houses besides hardware for carrying out a function of a technical process also control technology (50, 50'), to a modularly constructed overall Installation, wherein the installation modules (11, 11',12, 13, 14, 15, 16, 17) are arranged three-dimensionally and, according to a description of the overall installation, are connected mechanically and electrically to one another such that at least one coupling for data exchange is formed between the installation modules (11, 11',12, 13, 14, 15, 16, 17) via one or more communication protocols, and wherein a configuration of the overall installation is assembled and stored on a central server unit (20) having a data link to the installation modules (11, 11',12, 13, 14, 15, 16, 17) in terms of data technology, each installation module (11, 11',12, 13, 14, 15, 16, 17) is allocated at least one access path (30) to the stored configuration, and the installation modules (11, 11', 12, 13, 14, 15, 16, 17) are started, furthermore, after the installation modules (11, 11',12, 13, 14, 15, 16, 17) have been started, each installation module (11, 11',12, 13, 14, 15, 16, 17) carries out the following steps:
establishing a connection to the saved configuration via the access path (30),
reading out of configuration data respectively intended for the readout installation module (11, 11',12, 13, 14, 15, 16, 17) via the access path (30),
establishing, in accordance with the configuration data read out, necessary communication links (40) to at least one further installation module (11, 11', 12, 13, 14, 15, 16, 17), wherein linkages (60) are established between individual data objects (51) and also service interfaces are requested, and the installation modules (11, 11',12, 13, 14, 15, 16, 17) provide their respective function to the outside via data points and services.

2. Method according to claim 1,
wherein the linked data objects (51) are used by a first of the installation modules (11, 11', 12, 13, 14, 15, 16, 17) to access data and/or sensors/actuators of a second of the installation modules (11, 11',12, 13, 14, 15, 16, 17).

3. Method according to either claim 1 or claim 2,
wherein parameters contained in the read out configuration data are converted as constant values and automatically copied locally by each installation module (11, 11',12, 13, 14, 15, 16, 17) to their own data objects.

4. Method according to any of claims 1 to 3,
wherein, when reading out respective configuration data, also sequence logic is loaded and then executed by means of the control technology (50, 50') of the installation module (11, 11',12, 13, 14, 15, 16, 17) that is reading out and loading the sequence logic.

5. Method according to any of Claims 1 to 4,
wherein at least one operating mode of the overall installation is controlled by services exchanged via communication links (40) and/or by data objects and/or by hardware switches coupled to inputs and/or outputs for recording data points.

6. Method according to any of Claims 1 to 5,
wherein the configuration data contained in the configuration are monitored by the installation modules (11, 11',12, 13, 14, 15, 16, 17) during the operation of the overall installation and, when changes are made to the configuration, are accepted by at least one of the multiple installation modules (11, 11',12, 13, 14, 15, 16, 17) immediately or after re-initialization, wherein a polling method or an event-based protocol is used for monitoring the configuration data.

7. System for integrating a plurality of installation modules (11, 11',12, 13, 14, 15, 16, 17) each having at least one process-technical unit, which houses besides hardware for carrying out a function of a technical process also control technology (50, 50'), to a modularly constructed overall Installation, wherein the installation modules (11, 11',12, 13, 14, 15, 16, 17) are arranged three-dimensionally and, according to a description of the overall installation, are connected mechanically and electrically to one another such that at least one coupling for data exchange is formed between the installation modules (11, 11',12, 13, 14, 15, 16, 17) via one or more communication protocols, further comprising:
a central server unit (20) which is coupled to the installation modules (11, 11',12, 13, 14, 15, 16, 17) for data exchange and on which a configuration of the overall installation is stored, wherein each installation module (11, 11',12, 13, 14, 15, 16, 17) knows at least one access path (30) to the stored configuration, so that after the installation modules (11, 11',12, 13, 14, 15, 16, 17) have been started, they are set up for
- establishing a connection to the saved configuration via the access path (30),
- reading out of configuration data respectively intended for the read out installation module (11, 11',12, 13, 14, 15, 16, 17) via the access path (30),
- establishing, in accordance with the configuration data read out, necessary communication links (40) to at least one further installation module (11, 11',12, 13, 14, 15, 16, 17), which includes both establishing linkages between individual data objects (51) and requesting service interfaces, and wherein the installation modules (11, 11',12, 13, 14, 15, 16, 17) then providing their respective function to the outside via data points and services.

8. System according to claim 7, wherein
the central Server unit is part of one of the installation modules (11, 11',12, 13, 14, 15, 16, 17), in particular one of the process-technical units, or wherein the central server unit (20) has a central, highly available infrastructure.

9. System according to either Claim 7 or claim 8, wherein
the configuration includes the interconnection of data objects (5) between the installation modules (11, 11', 12, 13, 14, 15, 16, 17) and the interconnection of service Interfaces, wherein in particular one set of service interfaces in each case is combined to form a common service interface (42, 43) for an installation module (11, 11', 12, 13, 14, 15, 16, 17) and/or wherein a sequence logic program is part of the configuration.

10. The System according Claim 7, Claim 8, or Claim 9, wherein
each of the installation modules (11, 11', 12, 13, 14, 15, 16, 17) itself is described by a description file , which contains in particular:
- parameters,
- list of connectable data points with data type, access rights, etc.,
- list of offered services/interfaces, and/or
- list of used services/interfaces (stubs).

## Revendications

1. Procédé d'intégration de plusieurs modules d'installation (11, 11', 12, 13, 14, 15, 16, 17), comportant respectivement au moins une unité technique, laquelle, en plus du matériel permettant d'exécuter une fonction d'un processus technique, comprend également une technique de commande (50, 50') permettant de commander le matériel, permettant de former une installation globale modulaire, dans lequel les modules d'installation (11, 11', 12, 13, 14, 15, 16, 17) sont disposés dans l'espace et, selon une description de l'installation globale, reliés mécaniquement et connectés électriquement les uns aux autres de telle sorte qu'au moins un couplage technique de données est établi entre les modules d'installation (11, 11', 12, 13, 14, 15, 16, 17) par l'intermédiaire d'au moins un protocole de communication, et dans lequel une configuration de l'installation globale est compilée et sauvegardée dans une unité de serveur (20) centrale liée par couplage technique de données aux modules d'installation (11, 11', 12, 13, 14, 15, 16, 17), à chaque module d'installation (11, 11', 12, 13, 14, 15, 16, 17) est attribué au moins un chemin d'accès (30) à la configuration sauvegardée et les modules d'installation (11, 11', 12, 13 , 14, 15, 16, 17) sont démarrés,
en outre, après le démarrage des modules d'installation (11, 11', 12, 13, 14, 15, 16, 17), les étapes sont mises en oeuvre par chaque module d'installation (11, 11', 12, 13, 14, 15, 16 , 17) : l'établissement d'une connexion à la configuration sauvegardée par l'intermédiaire du chemin d'accès (30),
la lecture des données de configuration, déterminées pour le module d'installation (11, 11', 12, 13, 14, 15, 16, 17) en cours de lecture par l'intermédiaire du chemin d'accès (30), l'établissement des connexions de communication (40) nécessaires conformément aux données de configuration lues avec l'au moins un autre module d'installation (11, 11', 12, 13, 14, 15, 16, 17), dans lequel des liaisons (60) sont établies entre des objets de données (51) individuels et des interfaces de service peuvent être appelées et les modules d'installation (11, 11', 12, 13, 14, 15, 16, 17) mettent leurs fonctions respectives à disposition vers l'extérieur par l'intermédiaire des points de données et des services.

2. Procédé selon la revendication 1,
dans lequel, par l'intermédiaire des objets de données (51) liés, un premier module parmi les modules d'installation (11, 11', 12, 13, 14, 15, 16, 17) accède à des données et/ou des capteurs/actionneurs d'un deuxième module parmi les modules d'installation ( 11, 11', 12, 13, 14, 15, 16, 17).

3. Procédé selon la revendication 1 ou 2,
dans lequel les paramètres contenus dans les données de configuration lues sont implémentés sous la forme de valeurs constantes et automatiquement localement copiés, par chaque module d'installation (11, 11', 12, 13, 14, 15, 16, 17), dans les objets de données (51) propres.

4. Procédé selon l'une quelconque des revendications 1 à 3,
dans lequel lors de la lecture des données de configuration respectives, la logique de processus est également chargée puis mise en oeuvre au moyen de la technique de commande (50, 50') du module d'installation (11, 11', 12, 13, 14, 15, 16, 17) lisant et chargeant la logique du processus.

5. Procédé selon l'une quelconque des revendications 1 à 4,
dans lequel au moins un mode de fonctionnement de l'installation globale étant commandé par des services et/ou des objets de données (51) échangés par l'intermédiaire des connexions de communication (40) et/ou par des commutateurs matériels couplés à des entrées et/ou des sorties destinées à la détection des points de données.

6. Procédé selon l'une quelconque des revendications 1 à 5,
dans lequel les données de configuration comprises dans la configuration sont surveillées par les modules d'installation (11, 11', 12, 13, 14, 15, 16, 17) lors du fonctionnement de l'installation globale et, lorsque des modifications sont apportées à la configuration, elles peuvent être adoptées immédiatement ou après une réinitialisation de l'au moins un parmi la pluralité des modules d'installation (11, 11', 12, 13, 14, 15, 16, 17), dans lequel, pour surveiller les données de configuration, est utilisé un procédé d'interrogation ou un protocole basé sur des événements.

7. Système d'intégration de plusieurs modules d'installation (11, 11', 12, 13, 14, 15, 16, 17), comportant respectivement au moins une unité technique, laquelle, en plus du matériel permettant d'exécuter une fonction d'un processus technique, comprend également une technique de commande (50, 50') permettant de commander le matériel, permettant de former une installation globale modulaire, dans lequel les modules d'installation (11, 11', 12, 13, 14, 15, 16, 17) étant disposés dans l'espace et, selon une description de l'installation globale, reliés mécaniquement et connectés électriquement les uns aux autres de telle sorte qu'au moins un couplage technique de données est établi entre les modules d'installation (11, 11', 12, 13, 14, 15, 16, 17) par l'intermédiaire d'au moins un protocole de communication, comprenant en outre :
une unité serveur (20) centrale, liée par couplage technique de données aux modules d'installation (11, 11', 12, 13, 14, 15, 16, 17), sur laquelle est sauvegardée une configuration de l'installation globale, dans lequel pour chaque module d'installation (11, 11' , 12, 13, 14, 15, 16, 17) au moins un chemin d'accès (30) à la configuration sauvegardée est connu de telle sorte qu'après le démarrage des modules d'installation (11, 11', 12, 13, 14, 15, 16, 17), lesdits modules sont conçus
pour établir une connexion à la configuration sauvegardée par l'intermédiaire du chemin d'accès (30),
pour lire des données de configuration, déterminées pour le module d'installation (11, 11', 12, 13, 14, 15, 16, 17) en cours de lecture par l'intermédiaire du chemin d'accès (30),
pour établir des connexions de communication (40) nécessaires conformément aux données de configuration lues avec l'au moins un autre module d'installation (11, 11', 12, 13, 14, 15, 16, 17), ledit établissement comprenant l'établissement des liaisons (60) entre des objets de données (51) individuels et l'appel des interfaces de service et dans lequel les modules d'installation (11, 11', 12, 13, 14, 15, 16, 17) mettent ensuite leurs fonctions respectives à disposition vers l'extérieur par l'intermédiaire des points de données et des services.

8. Système selon la revendication 7, dans lequel
l'unité de serveur (20) centrale fait partie de l'un des modules d'installation (11, 11', 12, 13, 14, 15, 16, 17), en particulier de l'une des unités techniques, ou dans lequel l'unité de serveur (20) centrale comporte une infrastructure centrale hautement disponible.

9. Système selon la revendication 7 ou 8, dans lequel
la configuration comprend l'interconnexion des objets de données (51) entre les modules d'installation (11, 11', 12, 13, 14, 15, 16, 17) ainsi que l'interconnexion des interfaces de service, dans lequel, en particulier respectivement un ensemble d'interfaces de service, pour former une interface de service (42, 43) commune, est combiné pour un module d'installation (11, 11', 12, 13, 14, 15, 16, 17) et/ou dans lequel une logique de processus fait partie de la configuration.

10. Système selon la revendication 7, 8 ou 9, dans lequel
chacun des modules d'installation (11, 11', 12, 13, 14, 15, 16, 17) lui-même est décrit par l'intermédiaire d'un fichier de description, lequel comprend en particulier :
- des paramètres,
- la liste des points de données pouvant être connectés avec un type de données, des droits d'accès, etc.,
- la liste des services proposés/interfaces proposées, et/ou
- la liste des services utilisés/interfaces (éléments de remplacement) utilisées.
